# EUROPEAN PATENT APPLICATION

(11) **EP 4 574 479 A2**
(43) Date of publication of application: **25.06.2025**
(21) Application number: 24221224.9
(22) Date of filing: 18.12.2024
(51) Int. Cl.: B60H 1/00

(54) **IMPROVED COOLING ARRANGEMENT FOR A WORK VEHICLE**

(30) Priority: 21.12.2023 IT 202300027702
(71) Applicant: CNH Industrial Italia S.p.A., 10156 Torino (IT)
(72) Inventor: Natali, Silvio, 10156 Turin (IT); Fiorati, Stefano, 10156 Turin (IT); Lenzini, Nicola, 10156 Turin (IT); Fiorini, Beatrice, 10156 Turin (IT); Traversi, Andrea, 10156 Turin (IT); Ferri, Doriano, 10156 Turin (IT); Tronfi, Marco, 10156 Turin (IT)
(74) Representative: CNH Industrial IP Department

(57) **Abstract**

Cooling arrangement (1) for cooling a power train arrangement (2) for a work vehicle, comprising an internal combustion engine, ICE, (3), a transmission module (4) and an electric power module (5) operatively connected together,
said cooling arrangement (1) defining a plurality of cooling system and a conditioning system, said conditioning system comprising two conditions that shares in common one heat exchanger thereby reducing axial encumbrance of the cooling arrangement (1).

## Description

### TECHNICAL FIELD

The present invention concerns a cooling arrangement for a work vehicle.

The present invention finds its preferred, although not exclusive, application in a cooling arrangement for a work vehicle such as a tractor or an earth-moving machine. Reference will be made to this application by way of example below.

### BACKGROUND OF THE INVENTION

Work vehicles such as agricultural vehicles or earth moving vehicles are provided with complex cooling arrangements that allows the cooling of multiple subsystems of the vehicle.

Such subsystems comprise, inter alia, the engine cooling system, the transmission oil cooling arrangement, the cooling for charge air arrangement or the cab conditioning system.

Each cooling arrangement comprises a heat exchanger configured to allow the cooling of the operative fluid passing therein, in particular by free cooling, i.e. allowing the passage of the air through itself.

Such heat exchanger are usually placed one axially adjacent to the other so that an air flow passes through an external heat exchanger, that needs to cool to a minimum temperature the operative fluid, to an internal heat exchanger , that needs to cool to a maximum temperature. Usually, the internal heat exchanger is the heat exchanger of the engine cooling system.

It is evident that is the subsystems that need to be cooled are in great number, the disposition of the heat exchanger is problematic.

First, the axial extension of the heat exchangers could reduce the useful space of the work vehicle.

Second, some heat exchangers may need to operative at overlapping ranges of temperatures, thereby influencing negatively one with respect to the other form a thermodynamic efficiency point of view, thereby reducing the efficiency of the vehicle and increasing its fuel consumption.

The two aforementioned aims are furthermore felt for hybrid vehicles. Indeed, in such vehicles the electric machine and power electronic devices needs to be cooled to be maintained within a preset temperature range.

The addition of a further heat exchanger related to a cooling system for the electric equipment of the vehicle would further reduce the axial free space in the vehicle.

Moreover, the electric equipment usually need to bring the operative fluid at different temperature levels. There a proposed position of such heat exchanger could be inappropriate in view of the operation of the other adjacent heat exchanger thereby leading the overall efficiency of the cooling systems.

Therefore, the need is felt to reduce the encumbrance of known cooling arrangement for a work vehicle without reducing the overall efficiency of the work vehicle.

An aim of the present invention is to satisfy the above mentioned needs in a cost-effective and optimized manner.

### SUMMARY OF THE INVENTION

The aforementioned aim is reached by a cooling arrangement for a work vehicle and a work vehicle as claimed in the appended set of claims that are integral part of the present description.

### BRIEF DESCRIPTION OF DRAWINGS

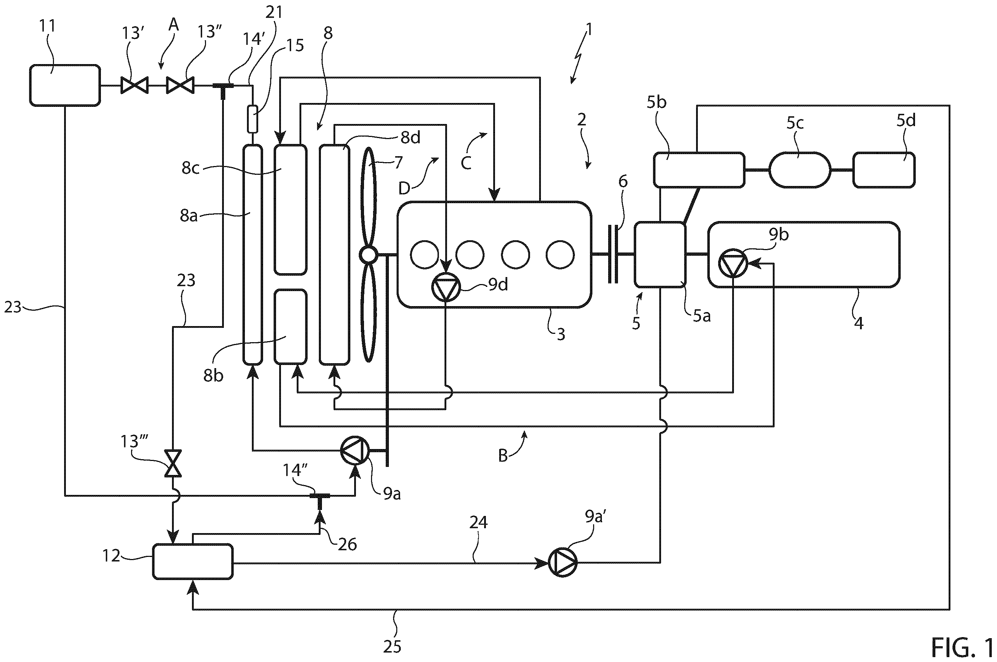

For a better understanding of the present invention, a preferred embodiment is described in the following, by way of a non-limiting example, with reference to the attached drawings wherein the only Figure 1 is a schematic representation of a cooling arrangement according to the invention.

### DETAILED DESCRIPTION OF THE INVENTION

Figure 1 discloses a cooling arrangement 1 for a powertrain arrangement 2 for a work vehicle (not shown) such as a tractor or an earth-moving machine.

The powertrain arrangement 2 essentially comprises an internal combustion engine, ICE, 3, a transmission module 4 configured to be carried by the ICE 3 and a electric power module 5 configured to carry, in combination or alternatively to ICE 3, the transmission module 4.

The schematic shown embodiment discloses a series layout between ICE 3 and the electric power module 5 comprising clutch means 6 configured to selectively disconnect the ICE 3 from the transmission module 4.

Clearly further and different layouts may be foreseen and not further described for sake of brevity.

The electric power module 5 essentially comprises an electric machine 5a that may be configured to operate as electric motor (to provide torque by using electric energy) or as generator (to provide electric energy by using torque).

The electric power module 5 may comprise electric power devices such as inverter means 5b, power distribution unit 5c or electric connectors 5d for implements/other operative elements of the vehicle that are electrically connected to the electric machine 5a and to energy storage means (not shown and if present) to allow the distribution of the electric energy among the aforementioned electric power devices and the electric machine 5a.

The cooling arrangement 1 comprises a plurality of cooling systems A, B, C, D each comprising a heat exchanger 8a, 8b, 8c, 8d configured to cool down to a preset temperature an operative fluid flowing in the cooling system and configured to be cooled by an airflow generated by ventilation means 7.

In detail, the ventilation means 7 may comprise a fan carried by the ICE 3 and therefore having a speed linked to the rotational speed of the ICE 3.

In detail, the cooling arrangement 1 comprise an engine cooling system D configured to cool down the ICE 3. The engine cooling system D essentially comprises first pump means 9d configured to allow circulation of an operative fluid within a first heat exchanger 8d.

The cooling arrangement 1 comprise a transmission cooling system B configured to cool down the lubricant fluid of the transmission module. The transmission cooling system C essentially comprises second pump means 9b configured to allow circulation of an operative fluid within a second heat exchanger 8b.

The cooling arrangement 1 comprise an air charger cooling system C configured to cool down the temperature of the exhaust flow coming into ICE 3 thereby pre-heating air inserted into ICE 3. The air charger cooling system C essentially comprises a third heat exchanger 8c and is usually not provided of pump means since the pressure of the air in the circuit allows its movement therethrough.

The cooling arrangement 1 further comprises an air conditioning system A comprising a fourth heat exchanger 8a, namely a condenser for the air conditioning system A.

The fourth heat exchanger 8a is placed axially outer with respect to the second and third heat exchangers 8b, 8c that are placed axially adjacent and faced on the other side with respect to the fourth heat exchanger 8a to the first heat exchanger 8d.

As per se known, the fourth heat exchanger 8a is configured to cool down the operative fluid flowing in the conditioning system A that is pumped by third pump means 8a that acts therefore as compressor means.

Preferably, third pump means 8a are operationally carried by ICE 3, therefore, similarly to ventilation means 7, their speed varies consequently to ICE speed.

In particular, the conditioning system A comprises a first portion comprising a first conditioner 11 configured to regulate the temperature within a cab of the work vehicle according to the specific thermodynamic transformation of the operative fluid within the conditioning system A and a second portion comprising a second conditioner 12 configured to regulate the temperature of at least one of the elements of the electric power module 5 according to the specific thermodynamic transformation of the operative fluid within the conditioning system A.

In a standard condition, the first conditioner 11 may act as evaporator or as conditioner, while the second conditioner 12 usually works as chiller to cool down the electric equipment of the vehicle 1.

In particular, the conditioning system A comprises a first conduit 21 fluidly connecting the fourth heat exchanger 8a to the first conditioner 11 and a second conduit 22 fluidly connecting the first conditioner 11 to the fourth heat exchanger 8a to define a closed loop for the circulation of the operative fluid of the conditioning system A.

The third pump means 9a is preferably fluidly interposed on the second conduit 21 upstream to the fourth heat exchanger 8d. The conditioning system further comprises first thermal expansion valve means 13' fluidly interposed on the first conduit 21 downstream to fourth heat exchanger 8a.

The conditioning system further comprises a third conduit 23 fluidly connecting the first conduit 21, upstream to the first thermal expansion valve means 13', and downstream to fourth heat exchanger 8a, to the second conditioner 12.

The second conditioner 12 is fluidly connected to the electric power module 5 via a fourth conduit 24 and then the operative fluid flowing therethrough is collected back to the second conditioner 12 via a fifth conduit 25. Such return fluid is then fluidly connected via a sixth conduit 24 to the second conduit 22 upstream to third pump means 9a'.

In detail, the conditioning system A comprises fourth pump means 9a' configured to allow the circulation of the fluid towards the fourth, fifth and sixth conduits 24, 25, 26. Preferably, the fourth pump means 9a' can be an electric pump.

The third conduit 23, that substantially is fluidly parallel, i.e. a fluid bypass, of the first conditioner 11, is fluidly joint to the first conduit 21 via a first hydraulic joint 14'. Similarly, the sixth conduit 26 is fluidly connected to the second conduit 22 via a second hydraulic joint 14''.

The conditioning system A further comprises a regulation valve 13'' fluidly interposed upstream to the first thermal expansion valve means 13' but downstream to the first hydraulic joint 14' configured to regulate the fluid passage towards the first conditioner 11.

Preferably, the regulation valve 13'' can be an ON/OFF valve.

The conditioning system A further comprises second thermal expansion valve means 13‴ fluidly interposed on the third conduit 23 upstream to the second conditioner 12.

The conditioning system A can further comprise a drier fluidly interposed on the first conduit 21 downstream to the fourth heat exchanger and upstream to the fluid connection to the third conduit 23.

The first and second thermal expansion valve means 13', 13‴, the regulation valve 13'' and the fourth pump means 9a' can be electrically connected to an electronic control unit, not shown, configured to control their operation.

In particular, cooling arrangement 1 can comprise sensor means (not shown), such as temperature means, placed in different location of the elements of the vehicle. In particular, cooling arrangement 1 can comprise temperature sensor means of at least one mong the elements of the electric power module 5.

The electronic control unit is configured to be electrically connected to the sensor means to acquire their data, elaborate these latter and control consequently the operation of first and second thermal expansion valve means 13', 13‴, the regulation valve 13'' and the fourth pump means 9a'.

In particular the control unit comprises elaboration means configured to elaborate the temperature data acquired by such sensor means, to acquire other operational data of the vehicle, such as its speed, load, speed of the engine, etc, to use stored information related to the condition system A and to the vehicle and define a temperature target of the operative fluid and provide a consequent control signal for controlling first and second thermal expansion valve means 13', 13‴, the regulation valve 13'' and the fourth pump means 9a' to reach a temperature target.

The operation of the embodiment of the invention as described above is the following.

In general, the ventilation means 7 aspires an airflow that passes through the heat exchangers 8 thereby cooling the operative fluid flowing therethrough. The airflow is increasingly heated from the outer to the inner heat exchanger and remove heat from the operative fluid. In this way the cooled fluid, at different temperatures according to the axial position of the heat exchanger, cools the respective device of the vehicle.

The conditioning system A may operate in three different ways to cool the electric power module 5 and/or condition the cab of the vehicle by using the only fourth heat exchanger 8d.

In a first operative condition only the cab needs to be conditioned, therefore the second expansion valve means 13‴ avoid passage of fluid towards the second conditioner 12. In this way, the third pump means 9a allows circulation in a refrigerative cycle thereby heating or cooling via the first conditioner 11 the cab of the vehicle.

In a second operative condition only the electric power module 5 need to be conditioned, therefore the regulation valve means 13" avoid passage of fluid towards the first conditioner 11. In this way, the fourth pump means 9a' allows circulation in a refrigerative cycle thereby heating or cooling via the electric power module 5.

In a third operative condition both the electric power module 5 and the cab need to be conditioned. Accordingly, the first and second expansion valve means 13', 13'' regulate the passage of the operative fluid between the first and the second conditioner 11, 12.

In view of the above operation, the invention further related to a method for operating the cooling arrangement, comprising the following steps executed by said electronic control unit:
i) acquiring data related to the temperature of the electric power module 5;
ii) determine a target temperature by elaborating the temperature data acquired by sensor means, by acquiring other operational data of vehicle, by using stored information related to the condition system A and to the vehicle;
iii) control the valve means 13', 13", 13‴ and pump means 9a' so that the electric power module 5 reach such target temperature.

The above method can be executed in closed loop till the target temperature is reached and can be executed continuously or at prefixed time interval.

In view of the foregoing, the advantages of a cooling arrangement and a work vehicle according to the invention are apparent.

Thanks to the proposed conditioning system that shares a heat exchanger between the cab conditioning system and providing a conditioning system for an electric power module allows to reduce the axial encumbrance of the powertrain arrangement 2, thereby increasing the useful space on the vehicle.

Indeed, the addition of a second conditioner and related conduits use less space compared to the use of a further axial heat exchanger voted to a cooling system for the electric power module.

Moreover, the use of a shared conditioning system both for cab conditioning and both for conditioning the electric power module allows to increase the thermodynamic balance of the overall cooling arrangement.

Furthermore, the electric control of the valves and the pumps of the conditioning system allows to provide a more flexible and easily controllable system for managing the temperature of the electric power module.

It is clear that modifications can be made to the described cooling arrangement and work vehicle which do not extend beyond the scope of protection defined by the claims.

For example, as said, the powertrain arrangement 2 can be made in a different manner and the electric power module 5 may be placed differently with respect to ICE 3.

Moreover, the topology of the conduit may be varied and similarly the elements of the conditioning system A can be varied.

Furthermore, valve means or pump means or even ventilation means may be of any suitable typology.

## Claims

1. Cooling arrangement (1) for cooling a power train arrangement (2) for a work vehicle, said powertrain arrangement (2) comprising an internal combustion engine, ICE, (3), a transmission module (4) and an electric power module (5) operatively connected together,
said cooling arrangement (1) comprising a engine cooling system (D) for cooling said ICE (3) comprising a first heat exchanger (8d), a cooling system (B) for cooling said transmission module (4) comprising a third heat exchanger (8b) and a conditioning system (A) comprising a fourth heat exchanger (8a),
first, third and fourth heat exchangers (8a, 8b, 8d) are placed axially adjacent one with respect to the other,
said cooling arrangement (1) comprising ventilation means (7) axially adjacent to said heat exchanger (8a, 8c, 8d) and configured to generate an airflow passing through them,
wherein said conditioning system (A) comprises a first conditioner (11) configured to condition a cab of said work vehicle and a second conditioner (12) configured to condition said electric power module (5),
said first and second conditions (11, 12) being both fluidly connectable to said fourth heat exchanger (8a).

2. Cooling arrangement according to claim 1, wherein said cooling arrangement (1) comprises a air charger cooling system (C) comprising a second heat exchanger (8c), said second heat exchanger (8c) being axially interposed among said first, third and fourth heat exchangers (8a, 8b, 8d).

3. Cooling arrangement according to claim 2, wherein said second heat exchanger (8c) is axially adjacent to said third heat exchanger (8b).

4. Cooling arrangement according to any of the preceding claims, wherein said fourth heat exchanger (8d) is axially outer with respect to the remaining ones, said first heat exchanger is axially inner with respect to the remaining ones, said ventilation means (7) being axially inner with respect to said heat exchangers (8a, 8b, 8d).

5. Cooling arrangement according to claim 4, wherein said ventilation means (7) are operatively carried by said ICE (3) .

6. Cooling arrangement according to any of the preceding claims, wherein said engine cooling system (A) comprises first pump means (9d) configured to allow circulation of an operative fluid through said first heat exchanger (8d).

7. Cooling arrangement according to any of the preceding claims, wherein said transmission cooling system (B) comprises second pump means (9b) configured to allow circulation of an operative fluid through said second heat exchanger (8b).

8. Cooling arrangement according to any of the preceding claims, wherein said conditioning system (A) comprises a first conduit (21) fluidly connecting said fourth heat exchanger (8d) to said first conditioner (11) and a second conduit (22) fluidly connecting said first conditioner to said fourth heat exchanger (8d) and third pump means (9a) fluidly interposed on said second conduit (22) upstream to said fourth heat exchanger (8d) to allow circulation within said first and second conduits (21, 22) of a refrigerant fluid of said conditioning system.

9. Cooling arrangement according to claim 8, further comprising a third conduit (23) fluidly connecting said first conduit (21) to said second conditioner (12) and a fourth conduit (24) fluidly connecting the second conditioner (12) to said electric power module (5), a fifth conduit (25) fluidly connecting said electric power module (5) to said second conditioner (12) and a sixth conduit (26) fluidly connecting said second conditioner (12) to said second conduit (22) upstream to said third pump means (9a), said conditioning arrangement (A) comprising fourth pump means (9a') configured to allow recirculation of the refrigerant fluid among said fourth, fifth and sixth conduits (24, 25, 26).

10. Cooling arrangement according to claims 8 or 9, wherein said third pump means (9a) are operatively carried by said ICE (3).

11. Cooling arrangement according to any of claims 8 to 10, wherein said fourth pump means (9a') comprise electric pump means.

12. Cooling arrangement according to any of claims 9 to 11, comprising regulation valve means (13'') fluidly interposed on said first conduit (21) downstream to the connection of said third conduit (23) and configured to avoid the circulation of said refrigerant fluid towards said first conditioner (11).

13. Cooling arrangement according to any of claims 9 to 12, further comprising first thermal expansion valve (13') fluidly interposed on said first conduit (22) downstream to the connection of said third conduit (23).

14. Cooling arrangement according to any of claims 9 to 12, further comprising second thermal expansion valve (13‴) fluidly interposed on said third conduit (23).

15. Cooling arrangement according to any of claims 9 to 14 in combination with claim 11, further comprising sensor means configured to detect a temperature of said electric power module (5) and an electronic control unit electrically connected to said valves (13', 13'', 13‴) and said pump means (9a'), said electronic control unit comprising elaboration means configured to elaborate the temperature data acquired by said sensor means, to acquire other operational data of said vehicle, to use stored information related to the condition system A and to the vehicle to define a temperature target of the refrigerant fluid and consequently provide a control signal for controlling said valve means (13', 13", 13‴) and said pump means (9a') to reach said temperature target.

16. Method for operating a cooling arrangement (1) as claimed in claim 15, comprising the following steps executed by said electronic control unit:
i) acquiring data related to the temperature of the electric power module (5);
ii) determine a target temperature by elaborating the temperature data acquired by said sensor means, by acquiring other operational data of said vehicle, by using stored information related to the condition system A and to the vehicle;
iii) control the valve means (13', 13'', 13‴) and said pump means (9a') so that said electric power module (5) reach said target temperature.

17. Vehicle comprising a cooling arrangement (1) for a powertrain arrangement (2) as claimed in any of the claims 1 to 15.
